# EUROPEAN PATENT APPLICATION

(11) **EP 1 971 180 A1**
(43) Date of publication of application: **17.09.2008**
(21) Application number: 07104356.6
(22) Date of filing: 16.03.2007
(51) Int. Cl.: H04R 1/10

(54) **Electronic device with earpiece**

(71) Applicant: Darfon Electronics Corporation, Gueishan Taoyuan (TW)
(72) Inventor: Yang, Chou-Hang, 310 Hsinchu County (TW)
(74) Representative: 2K Patentanwälte Kewitz & Kollegen

(57) **Abstract**

An electronic device with earpiece. The electronic device with earpiece includes a main body, an earpiece body and a hook. The earpiece body is detachably inserted in the main body. The hook includes a segment. The hook is movably disposed on the earpiece body between a first position and a second position. When the hook is in the first position, the segment abuts the earpiece body, and when the hook is in the second position, the segment is spaced apart from the earpiece body.

## Description

### BACKGROUND OF THE INVENTION

### Field of the Invention

The invention relates to electronic devices with earpieces, and in particular, to an electronic device comprising a card-shaped earpiece with a detachable hook.

### Description of the Related Art

Earpieces are commonly used in music players, personal digital assistants (PDA), mobile phones, and various other electronic devices.

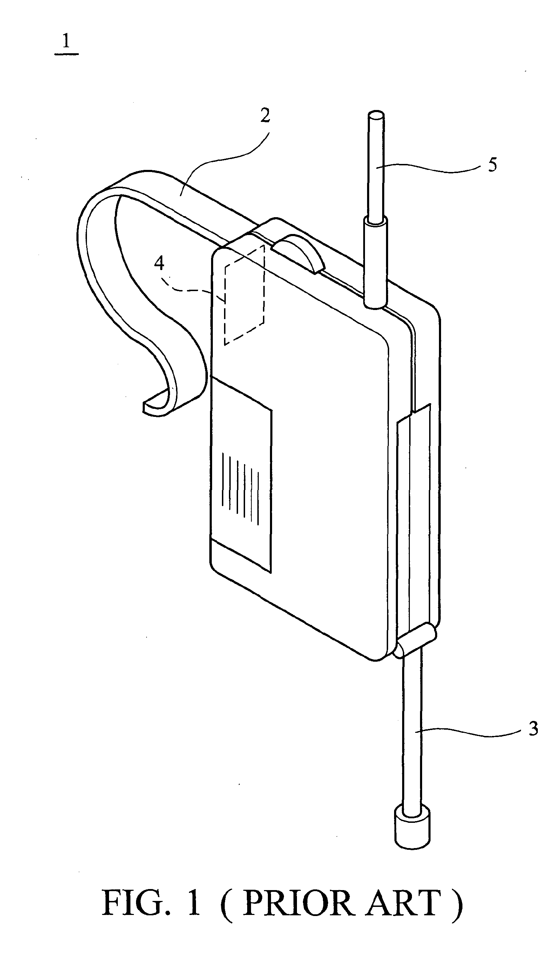

However, conventional earpieces comprise wires connecting to the main device, reducing convenience. Taiwan Patent No. 345364 discloses a wireless earpiece with microphone 1 used on a mobile phone, as shown in Fig. 1. The earpiece 1 comprises a hook 2, a microphone 3, a sound hole 4, and an antenna 5. When receiving a call with the earpiece 1, the hook 2 is hooked on the ear and sound is received from the sound hole 4. Additionally, sound can also be sent through the microphone 3 and the antenna 5.

The hook 2 of the earpiece 1 cannot be stored in the earpiece 1, and the earpiece 1 cannot be stored in the mobile phone, causing inconvenience during transport.

### BRIEF SUMMARY OF THE INVENTION

The invention provides an electronic device with earpiece, wherein the earpiece can be received within the electronic device. In addition, the hook of the earpiece can also be received within the earpiece.

An electronic device with earpiece is provided, comprising a main body, an earpiece body and a hook. The earpiece body is detachably inserted in the main body, and the hook is movably disposed on the earpiece body between a first position and a second position.

When the hook is in the first position, a segment of the hook abuts the earpiece body. When the hook is in the second position, the segment is apart from the earpiece body.

The earpiece body comprises a microphone disposed adjacent to the segment of the hook.

The earpiece body further comprises a connector connecting to the main body, allowing charging of the earpiece body.

The main body comprises a socket, allowing the earpiece to be received therein.

The socket comprises a PCMCIA socket.

The connector is disposed opposite to the segment of the hook.

The earpiece body comprises a rail and the hook comprises a track. The rail and the track are connected in a slideable manner.

The earpiece body further comprises an opening, a receiver, and an axle. The receiver, having a hole, is disposed in the opening in a rotatable manner. The axle is disposed on the main body through the hole.

The receiver comprises a speaker, a sound hole, and a conduit. The conduit communicates the speaker and the sound hole.

The hook is L-shaped.

The earpiece body is a thin card.

The invention provides an earpiece comprising an earpiece body and a hook. The hook is movably disposed on the earpiece body between a first position and a second position.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a schematic view of a conventional wireless earpiece;

Fig. 2 is a schematic view of an electronic device with earpiece of the invention;

Fig. 3 is a schematic view of an earpiece body of the invention in a first position;

Fig. 4 is a schematic view of the earpiece body of the invention in a second position; and

Fig. 5 is a schematic view of the earpiece body of the invention in use.

### DETAILED DESCRIPTION OF THE INVENTION

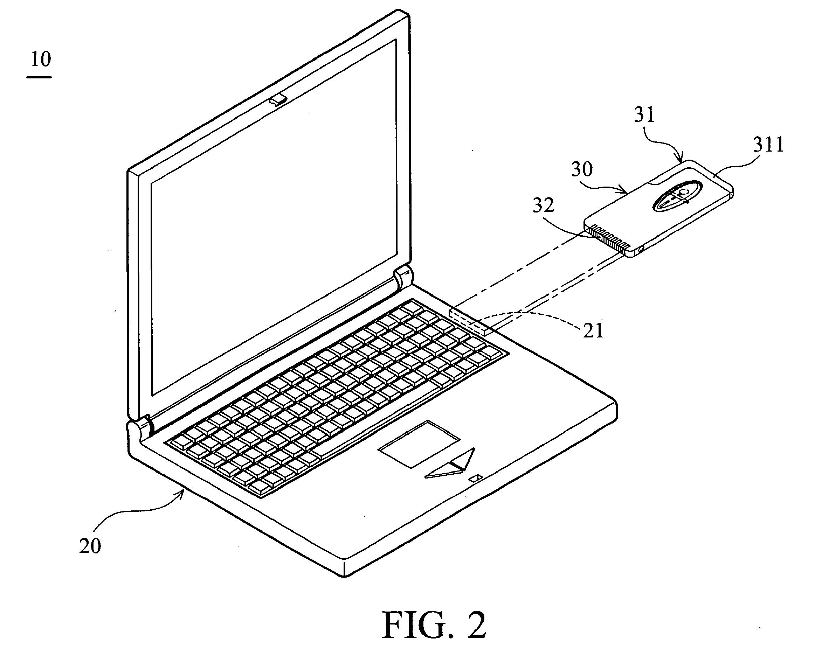

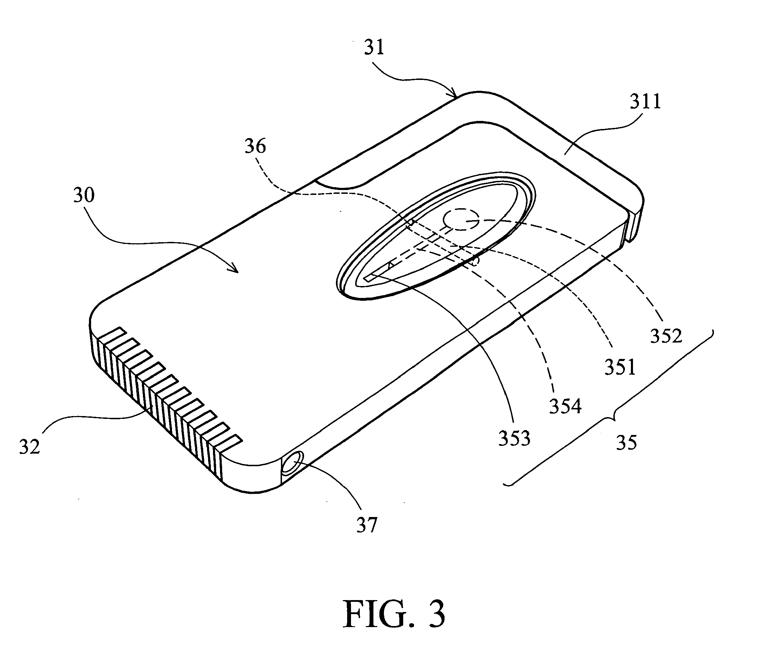

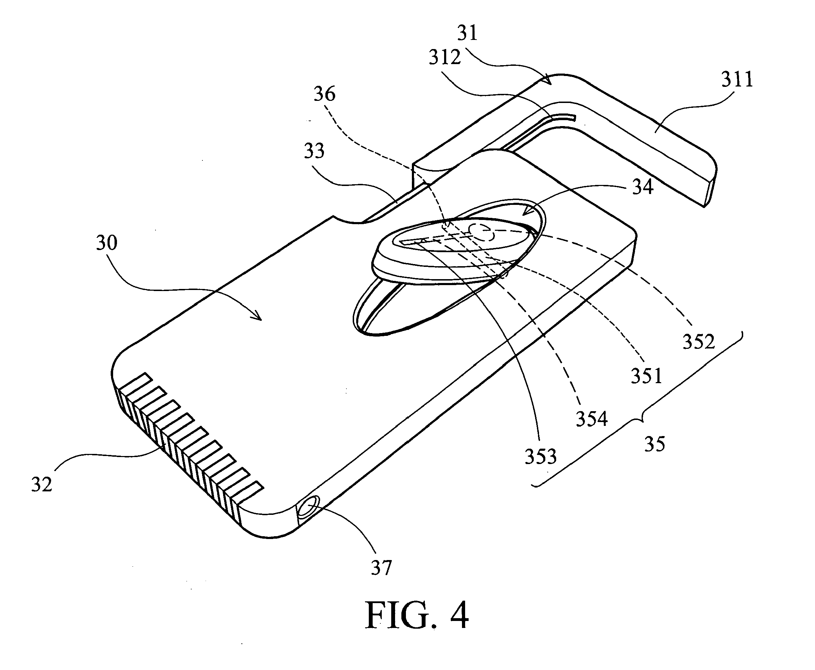

Referring to Fig. 2, the electronic device with earpiece 10 comprises a main body 20, an earpiece body 30 and a hook 31. The main body 20 comprises a socket 21, and the earpiece body 30 is detachably inserted in the socket 21 of the main body 20. The hook 31 is movably disposed on the earpiece body 20 between a first position, for storage (as shown in Fig. 3) and a second position, or an extended position (as shown in Fig. 4). The hook 31 comprises a segment 311, wherein when the hook 31 is in the first position, the segment 311 abuts the earpiece body 30, and when the hook 31 is in the second position, the segment 311 is apart from the earpiece body 30.

The earpiece body 30 comprises a connector 32, a rail 33, an opening 34, a receiver 35, an axle 36 and a microphone 37. In the embodiment, the earpiece body 30 is rectangular, as shown in Fig. 3. When the segment 311 of the hook 31 abuts the earpiece body 30, the segment 311 is at a side of the earpiece body 30 and the connector 32 is at another side of the earpiece body 30. In other words, the connector 32 is disposed opposite to the segment 311 of the hook 31. When the earpiece body 30 is plugged to the socket 21 of the main body 20, the connector 32 electrically connects to the main body 20, charging the battery (not shown) within the earpiece body 30. Additionally, the rail 33 is disposed on the adjacent side of the segment 311. The hook 31 further comprises a track 312, connected to the rail 33, such that the hook 31 can slide on the track 33.

The receiver 35, rotatably disposed in the opening 34, comprises a hole 351, a speaker 352, a sound hole 353 and a conduit 354. The axle 36 penetrates the hole 351, allowing the receiver 35 to rotate on the axle 36. Sound is amplified by the speaker 352 within the receiver 35, through the conduit 354, and out to the sound hole 353. The microphone 37, receiving sound, is disposed on the adjacent side of the segment 311 of the hook 31 and is adjacent to the connector 32.

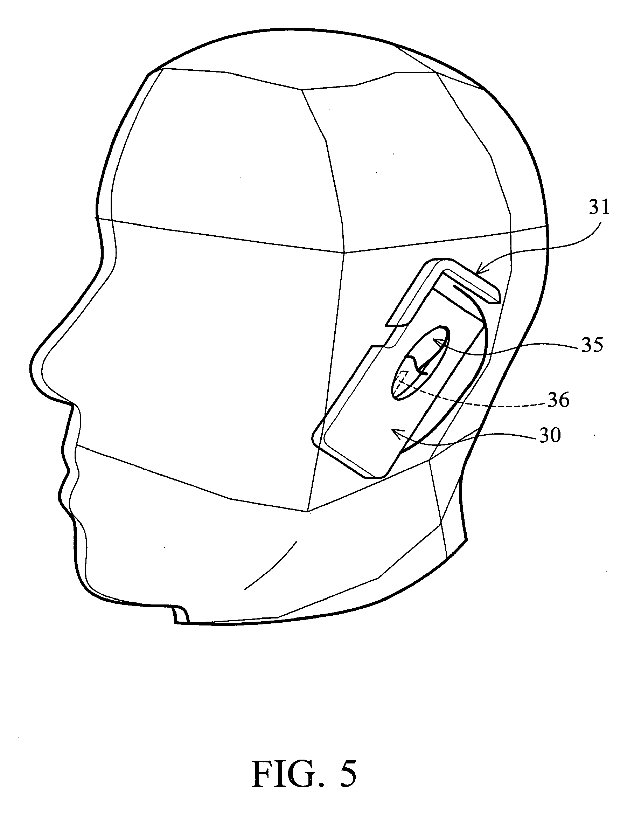

When using the electronic device 10, the earpiece body 30 is taken from the socket 21 of the main body 20. The hook 31 is moved from the first position to the second position by relatively sliding the rail 33 and the track 312 of the hook 31. The segment 311 of the hook 31 is then apart from the earpiece body 30, allowing the hook 31 to fit the ear, as shown in Fig. 5. The receiver 35 is rotated away from the opening 34 to a proper degree, and plugged in the external auditory meatus by the end with the sound hole 353, clearly transmitting sound. When storing the earpiece body 30, the hook 31 is moved from the second position to the first position, allowing the segment 311 of the hook 31 to abut the earpiece body 30. The earpiece body 30 is plugged in the socket 21 of the main body 20 for storage. Moreover, when the earpiece body 30 is plugged in the socket 21, the connector 32 electrically connects with the main body 20, charging the earpiece body 30.

The hook 31 is L-shaped for hooking on the ear of the user. The L-shaped hook 31 forms a complete thin card when stored to the earpiece body 30. The earpiece body 30 is received in the main body 20 by insertion, lightweight and easily transported. Additionally, the earpiece body 30 plugs to the socket 21 of the main body 20 to be charged, wherein the socket 21 is a PCMCIA (Personal Computer Memory Card International Association) socket.

It should be noted that the electronic device 10 is not limited to a notebook computer as shown in Fig. 2, and can be other kinds of electronic device. The socket 21 and the connector 32 are not limited to those shown in Fig. 2, and can be designed according to different standards.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An electronic device with an earpiece (10), comprising:
a main body (20);
an earpiece body (30), detachably inserted in the main body; and
a hook (31), movably disposed on the earpiece body between a first position and a second position.

2. The electronic device with earpiece as claimed in claim 1, wherein the hook (31) comprises a segment (311), and when the hook is in the first position, the segment abuts the earpiece body (30), and when the hook is in the second position, the segment is apart from the earpiece body (30).

3. The electronic device with earpiece as claimed in claim 2, wherein the earpiece body (30) comprises a microphone (37) disposed adjacent to the segment (311) of the hook.

4. The electronic device with earpiece as claimed in any of the preceding claims, wherein the earpiece body (30) further comprises a connector (32) connecting to the main body (20), allowing charging of the earpiece body.

5. The electronic device with earpiece as claimed in any of the preceding claims, wherein the main body (20) comprises a socket (21), allowing the earpiece body to be received therein.

6. The electronic device with earpiece as claimed in claim 5, wherein the earpiece body (30) further comprises a connector (32) connecting to the main body (20), allowing charging of the earpiece body.

7. The electronic device with earpiece as claimed in claim 5 or 6, wherein the socket (21) comprises a PCMCIA socket.

8. The electronic device with earpiece as claimed in claim 6, wherein the connector (32) is disposed opposite to the segment (311) of the hook.

9. The electronic device with earpiece as claimed in any of the preceding claims, wherein the earpiece body (30) comprises a rail (33) and the hook (31) comprises a track (312), and the rail (33) and the track is connected in a slideable manner.

10. The electronic device with earpiece as claimed in any of the preceding claims, wherein the earpiece body (30) further comprises:
an opening (34);
a receiver (35), disposed in the opening in a rotatable manner, having a hole; and
an axle (36), disposed on the earpiece body through the hole;
wherein the receiver rotates on the axle.

11. The electronic device with earpiece as claimed in claim 10, wherein the receiver (35) comprises:
a speaker (352);
a sound hole (353), and
a conduit (354), communicating the speaker and the sound hole.

12. The electronic device with earpiece as claimed in any of the preceding claims, wherein the hook (31) is L-shaped.

13. The electronic device with earpiece as claimed in any of the preceding claims, wherein the earpiece body (30) is a thin card.

14. An earpiece (10), in particular for connection to an electronic device, comprising:
an earpiece body (30); and
a hook (31), movably disposed on the earpiece body between a first position and a second position.

15. The earpiece as claimed in claim 14, wherein the hook (31) comprises a segment (311), when the hook is in the first position, the earpiece body (30) abuts the earpiece body, and when the hook is in the second position, the earpiece is apart from the earpiece body (30).

16. The earpiece as claimed in claim 15, wherein the earpiece body (30) comprises a microphone (37) disposed adjacent to the segment (311) of the hook.

17. The earpiece as claimed in any of claims 14 to 16, wherein the earpiece body (30) further comprises a connector (32) connecting to the main body (20), allowing charging of the earpiece body.

18. The earpiece as claimed in claim 17, wherein the connector (32) is disposed opposite to the segment (311) of the hook.

19. The earpiece as claimed in any of claims 14 to 18, wherein the earpiece body (30) comprises a rail (33) and the hook (31) comprises a track (312), and the rail (33) and the track are connected in a slideable manner.

20. The earpiece as claimed in any of claims 14 to 19, wherein the earpiece body (30) further comprises:
an opening (34); and
a receiver (35), disposed in the opening in a rotatable manner, having a hole; and
an axle (36), disposed on the main body through the hole;
wherein the receiver rotates on the axle.

21. The earpiece as claimed in claim 20, wherein the receiver (35) comprises:
a speaker (352);
a sound hole (353), and
a conduit (354), communicating the speaker and the sound hole.

22. The earpiece as claimed in any of claims 14 to 21, wherein the hook (31) is L-shaped.

23. The earpiece as claimed in any of claims 14 to 22, wherein the earpiece body (30) is a thin card.
